# EUROPEAN PATENT SPECIFICATION

(11) **EP 3 626 086 B1**
(45) Date of publication and mention of the grant of the patent: **14.09.2022**
(21) Application number: 18196112.9
(22) Date of filing: 21.09.2018
(51) Int. Cl.: A24C 5/32, A24C 5/35

(54) **CHANNEL HOPPER FOR ROD-LIKE ARTICLES, FILLER FOR LOADING A CONTAINER WITH ROD-LIKE ARTICLES, AND UNLOADER FOR EMPTYING OF SUCH CONTAINER**
KANALTRICHTER FÜR STABFÖRMIGE ARTIKEL, FÜLLER ZUM BELADEN EINES BEHÄLTERS MIT STABFÖRMIGEN ARTIKELN UND ENTLADER ZUM ENTLEEREN SOLCH EINES BEHÄLTERS
TRÉMIE DE CANAL POUR ARTICLES EN FORME DE TIGE, DISPOSITIF DE REMPLISSAGE PERMETTANT DE CHARGER UN RÉCIPIENT AVEC DES ARTICLES EN FORME DE TIGE ET DISPOSITIF DE DÉCHARGEMENT POUR LE VIDAGE DUDIT RÉCIPIENT

(43) Date of publication of application: 25.03.2020
(73) Proprietor: International Tobacco Machinery Poland SP. Z O.O., 26-600 Radom (PL)
(72) Inventor: ZADECKI, Robert, 26-600 Radom (PL); SOTOWSKI, Krzysztof, 26-600 Radom (PL)
(74) Representative: Markieta, Jaroslaw Franciszek

(56) References cited:
- EP-A1- 3 305 101
- WO-A1-2012/074422
- US-A- 4 365 703

## Description

The object of the invention is a channel hopper for rod-like articles, a filler for loading a container with rod-like articles, and an unloader for emptying of such container.

In the tobacco industry, apparatuses for transferring rod-like articles are commonly used, whereas the rod-like articles may be transferred in the form of a mass flow as well as in containers. Various conveyors, hoppers and channels are used in production lines. The invention concerns a channel hopper which may be used among others in fillers and unloaders of containers for rod-like articles, referred to as trays. The invention may also be used in other apparatuses in which the rod-like articles are temporarily stored and transferred to successive operating stations.

The tray fillers used in the tobacco industry work cyclically, whereas in one working cycle one tray is filled. Tray fillers for loading of single-chamber and multi-chamber trays are known. The known tray fillers are provided with hoppers for storage of rod-like articles and filling units which enable rod-like articles to flow from the hopper to a chamber in the case of a single-chamber tray or to multiple chambers of a tray in the case of a multi-chamber tray.

The patent EP1955604B1 has disclosed a tray filler adapted to filling multi-chamber trays, the filler being provided with a multi-channel hopper and a filling unit having sections for individual channels of the hopper. The partitions limiting the channels of the hopper have two walls. The filling unit is provided with two rows of rollers which may rotate and move relative to one another, moreover, they are arranged to make a reciprocating motion in the horizontal direction. The filling unit is adapted to alternate starting and blocking of the article flow through the channels of the hopper to the chambers of the tray, the filling unit being situated underneath the tray. After blocking the flow, the filling unit supports the rod-like articles in the channels of the hopper. The disclosed tray filler may also be used to fill a single-chamber tray.

The patent EP2744358B1 also presents a tray filler adapted to fill multi-chamber trays and is provided with a multi-channel hopper for rod-like articles and a filling unit situated underneath the hopper, the filling unit also having sections for individual channels of the hopper. The partitions limiting the channels of the hopper have two walls, whereas the channels of the hopper do not have a back wall.

The patent EP2645888B1 discloses a filler of a multi-segment tray, whereas a filling unit built in a similar way as in the above documents is additionally arranged to make a vertical movement along the chambers of the multi-chamber tray. The filling unit in its upper position is situated underneath the hopper. Similarly, the filling unit alternately starts and blocks the flow of rod-like articles and supports the articles after blocking the flow.

The document DE3103836A1 shows a tray filler for filling of a single-chamber tray. The tray filler is provided with a single-chamber hopper and a filling unit built in a similar way as described above. The filling unit is situated underneath the hopper.

The patent EP2079327B1 shows a method for emptying a channel hopper wherein individual channels are emptied successively one after another, channels are being emptied through slidable throat, which is situated underneath the hopper.

Documents EP 3 305 101 A, US 4 365 703 A and WO 2012/074422 A disclose different channel hoppers for rod like articles.

In known channel hoppers provided with filling units there is a risk that rod-like articles are gripped by the filling unit so that they partially project outside the filling unit and are damaged, moreover they may slip out in an uncontrolled manner and disturb the tray filling process.

The object of the invention is a channel hopper for rod-like articles wherein the flow of the rod-like articles through the channels of the hopper takes place in the form of a mass flow under the influence of gravity, comprising: at least two channels for storage of rod-like articles, the channel being provided with an inlet and an outlet for rod-like articles and with side walls. The channel is situated between limiting regions, and a limiting region comprises a limiting element having a lateral surface which limits the space of the channel. The hopper comprises movable supporting elements adapted to change their configuration from open configuration to closed configuration and vice versa, whereas in the open configuration the flow of rod-like articles through the channels is enabled, and in the closed configuration the flow of rod-like articles through the channels is blocked. The hopper according to the invention is characterized in that at least one movable supporting element in the open configuration takes a position at least partially in the limiting region, and in the closed configuration takes a position at least partially inside the channel.

The hopper according to the invention may be further characterized by comprising two movable supporting elements which in the open configuration take a position at least partially in adjacent limiting regions, and in the closed configuration take a position at least partially in the channel between adjacent limiting regions.

The hopper according to the invention may be further characterized in that the width of the limiting region is smaller than the width of the channel, in particular the width of the limiting region is in the range between 10% and 50% of the channel width.

The hopper according to the invention may be further characterized in that the movable supporting element is situated inside the side walls.

The hopper according to the invention may be further characterized in that the movable supporting element is situated in whole in the limiting region.

The hopper according to the invention may be further characterized in that the movable supporting element has the form of a cylindrical surface sector.

The hopper according to the invention may be further characterized in that the movable supporting element has a guiding roller.

The hopper according to the invention may be further characterized in that the movable supporting element has the form of a bar.

The hopper according to the invention may be further characterized in that the movable supporting element is adapted to make a swing movement.

The hopper according to the invention may be further characterized in that the movable supporting element is adapted to make a linear movement.

The hopper according to the invention may be further characterized in that the movable supporting element in the open configuration is situated at least partially inside a limiting element.

The hopper according to the invention may be further characterized in that the movable supporting element in the open configuration is situated at least partially under the limiting element.

The hopper according to the invention may be further characterized in that a guiding element made of a fabric, a plastic material or a metal mesh is attached to the limiting element.

The hopper according to the invention may be further characterized in that the channel has a constant volume.

The object of the invention is also a filler for loading a container with rod-like articles comprising a conveyor of empty containers, a unit for moving the container being filled, a conveyor of filled containers, a mass flow hopper for rod-like articles which is characterized by being provided with a channel hopper according to the invention.

The object of the invention is also an unloader for emptying a container of the rod-like articles comprising a conveyor of filled containers, a handling unit for turning of the filled container, a conveyor of empty containers characterized by being provided with a channel hopper according to the invention.

The channel hopper according to the invention ensures very effective tray filling where the risk of article damage and uncontrolled slipping out of the articles from the filling unit is eliminated.

The object of the invention is shown in detail in a preferred embodiment in a drawing in which:
Fig. 1 shows a channel hopper for a multi-chamber tray;
Fig. 2 shows a channel hopper for a single-chamber tray;
Figs. 3, 4, 5 show embodiments of cylindrically shaped supporting elements;
Fig. 6 shows an embodiment of the cylindrically shaped supporting elements provided with guiding rollers;
Fig. 7 shows an embodiment of the cylindrically shaped supporting elements, with directing elements being situated in the channel;
Fig. 8 shows an embodiment of the cylindrically shaped supporting elements, with a rotating roller being situated in the channel;
Fig. 9 shows an embodiment of an individual cylindrically shaped supporting element;
Figs. 10, 11, 12 show embodiments of supporting elements in the form of bars;
Fig. 13 shows an embodiment of the supporting elements in the form of flat springs;
Fig. 14 shows a filler for multi-chamber trays;
Fig. 15 shows an unloader for single-chamber trays;
Fig. 16 shows the channel hopper of the unloader of Fig. 15.

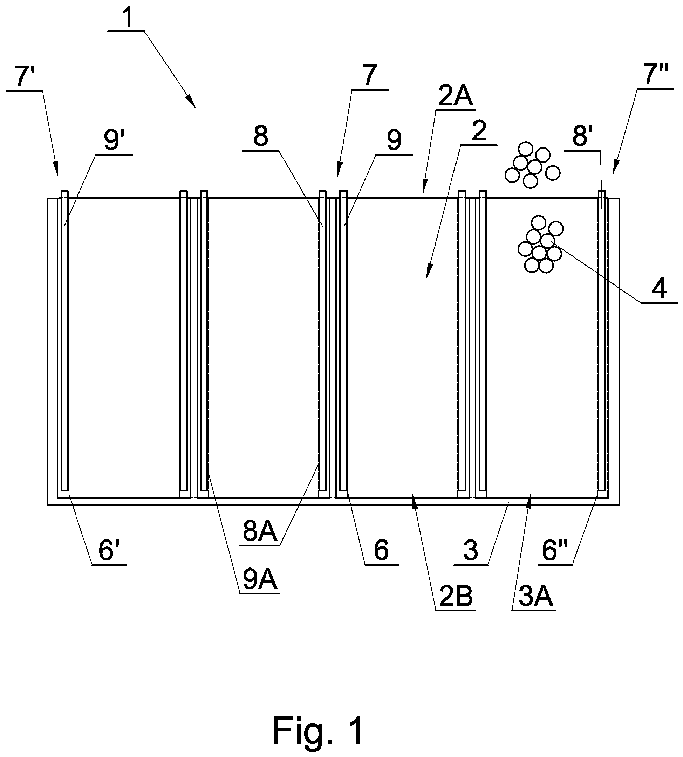

Fig. 1 shows a channel hopper 1 having channels 2 and a multi-chamber tray 3 at a position as at the moment of start of filling of the multi-chamber tray 3 with rod-like articles 4, whereas the channels 2 are shown without supporting elements which are used to start or block the flow of rod-like articles in the channels 2, i.e. which fulfill such function as a filling unit in tray fillers known from the prior art and will be further discussed below in this description. The rod-like articles 4 are delivered to the channel hopper 1 from above through inlets 2A, whereas only exemplary rod-like articles 4 are shown in the channels 2 of the channel hopper 1 and above the hopper 1. The channel 2 is defined i.e. limited on its sides by limiting regions 6. The limiting region 6 between the adjacent channels 2 comprises a limiting element 7 in the form of two walls 8 and 9. The outermost limiting region 6' on the left side comprises the limiting element 7' in the form of the wall 9'. The outermost limiting region 6" on the right side comprises the limiting element 7" in the form of the wall 8'. The channel 2 is limited on its sides by the surfaces 8A, 9A of the walls 8, 8', 9, 9' of the limiting elements 7, 7', 7". The channel 2 has the inlet 2A through which the rod-like articles are delivered to the channel 2 and the outlet 2B through which the rod-like articles are fed into the chambers 3A of the multi-chamber tray 3. The rod-like articles 4 which are delivered to the channel hopper 1 are collected in a not shown hopper above the inlets 2A of the channels 2. In the shown position of the tray 3, the bottom of the chamber 3A of the multi-chamber tray 3 is situated just below the outlet 2B of the channel 2.

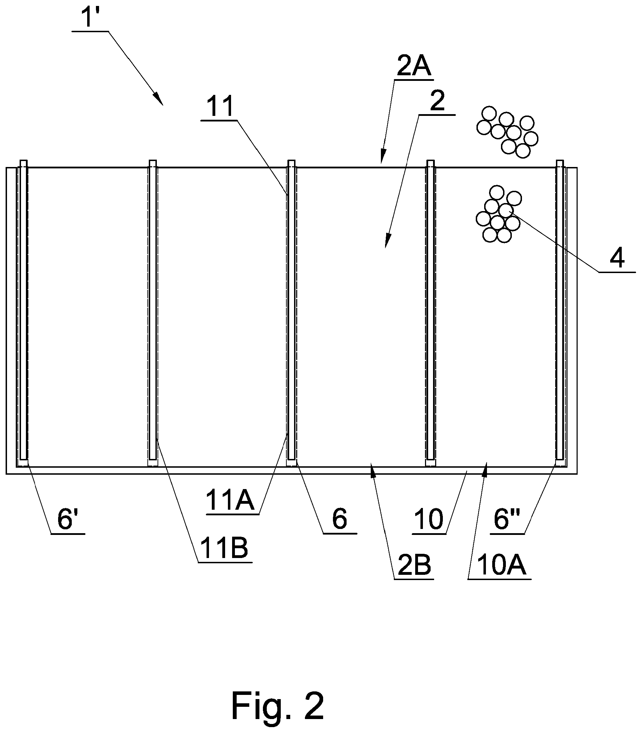

Fig. 2 shows the channel hopper 1' having the channels 2 and a single-chamber tray 10 at a position as at the moment of start of filling of the single-chamber tray 10 with the rod-like articles 4, whereas the channels 2 are shown without the supporting elements used to start or block the rod-like articles in the channels 2. The channel 2 is defined i.e. limited on its sides by limiting regions 6. The limiting region 6 between the adjacent channels 3 comprises the limiting element 11 in the form of a single wall. The outermost limiting region 6', 6" also comprises the limiting element 11 in the form of a single wall. The channel 2 is limited on its sides by the surfaces 11A, 11B of the limiting elements 11. The channel 2 has the inlet 2A and the outlet 2B. The rod-like articles 4 which are delivered to the channel hopper 2 are collected above the inlets 2A of the channels 2. The outlets 2B are directed towards the inside of the chamber 10A of the single-chamber tray 10.

A channel hopper according to the invention is provided with supporting elements which fulfill the function of filling units known in the prior art, whereas they may take an open configuration in which the rod-like articles flow downwards along the channels of the hopper to the tray being filled, and a closed configuration in which the rod-like articles are blocked in the channels of the hopper.

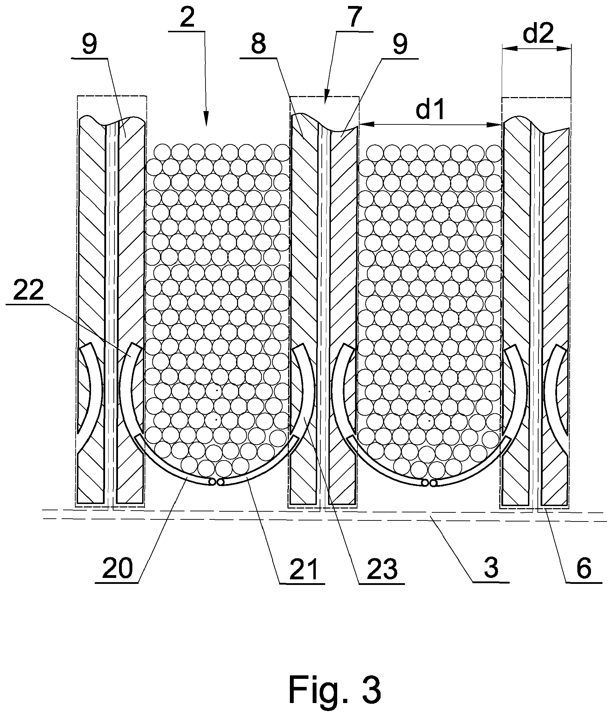

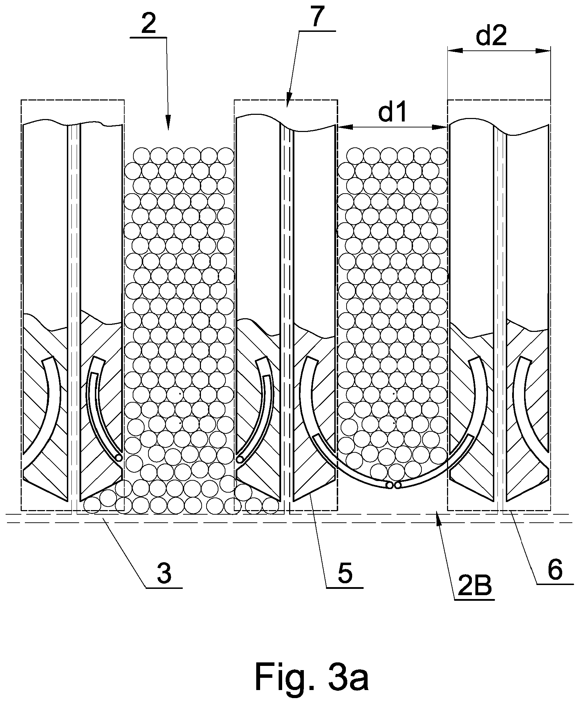

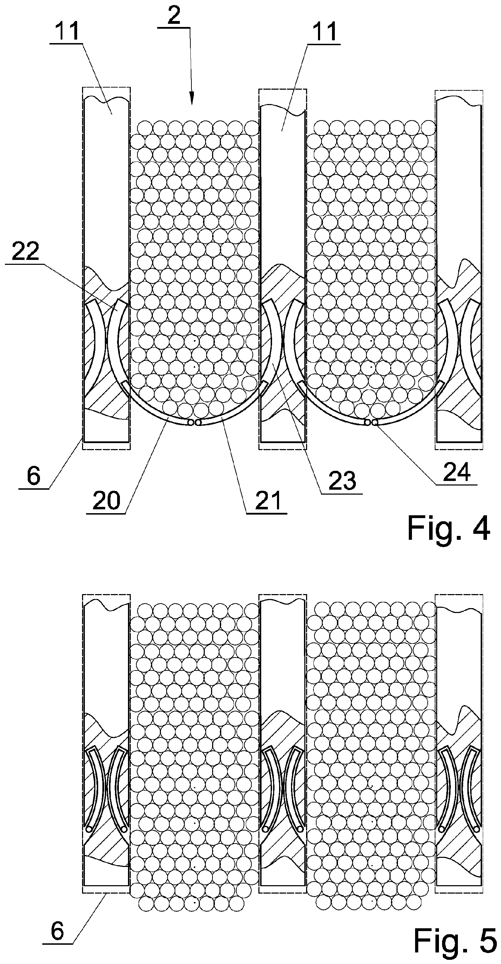

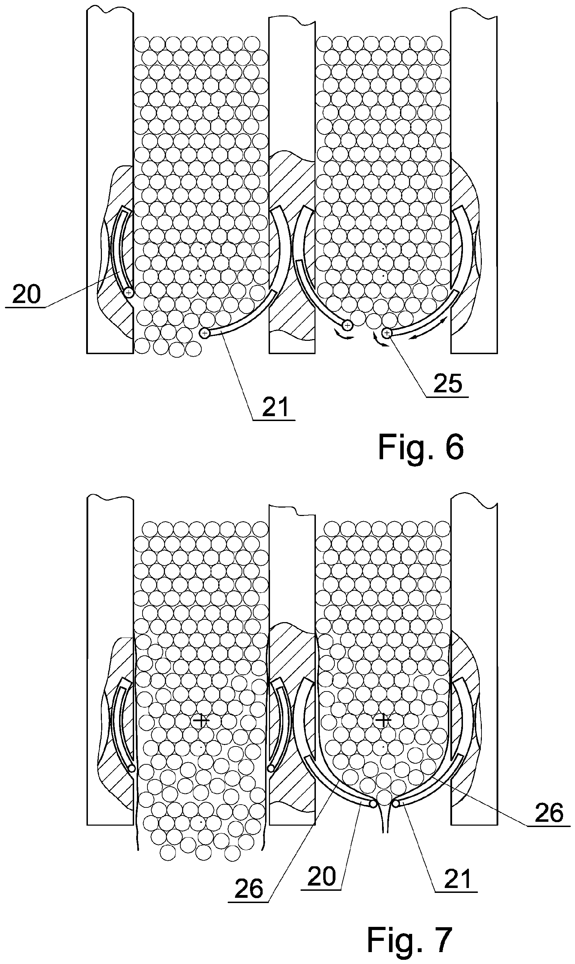

Fig. 3 shows two adjacent channels 2 of the channel hopper 1 for filling of the multi-chamber tray 3. The channel hopper 1 is provided with rotational supporting elements 20, 21 which are shown in the closed configuration, i.e. the supporting elements 20, 21 block the rod-like articles 4 in the channel 3. The supporting elements 20, 21 have the form of cylindrical surface sectors. In the closed configuration, the supporting elements 20, 21 take a position partially in the channel 2 and partially in arched grooves 22, 23 made in the walls 8, 9 of the limiting element 7, i.e. take a position partially in the limiting region 6 and partially in the channel 2, whereas the supporting elements 20, 21 may be fully inserted into the channel 2. Fig. 4 shows two adjacent channels 2 of the channel hopper 1' for filling of the single-chamber tray 10, whereas the single-chamber tray 10 is not shown. As shown in Fig. 5, in the open configuration the supporting elements 20, 21 are fully inserted into the grooves 22, 23, i.e. they are fully situated in the limiting region 6 within the walls 8, 9 of the limiting element 7. The supporting elements 20, 21 may partially project into the channel 2, which may facilitate the subsequent change from open to closed configuration. The supporting elements 20, 21 may make swing movements in such a way that the flow of the rod-like articles 4 is blocked symmetrically on both sides. The supporting elements 20, 21 may make swing movements in such a way that the flow of the rod-like articles 4 is asymmetrically closed as shown in Fig. 6, further, they may move at different speeds during the change of configuration, whereas they may move at different speeds during the change from closed to open and from open to closed configuration. The supporting elements 20, 21 may make swing reciprocating movements before reaching the target position. The supporting elements 20, 21 may be situated at any height in the channel 2, whereas preferably they are situated in the lower part of the channel, as close as possible to the outlet 2B so that the rod-like articles 4 are fed into the tray from the smallest possible height.

In the embodiment shown in Fig. 3, the width d1 of the channel 2 is greater than the width d2 of the limiting region 6. Tests showed a correct operation of the supporting elements, i.e. an effective change from closed to open configuration and vice versa when the width d2 constituted 10%, 20%, 25%, 30% and 50% of the width d1. Also the cases in which d2 was above 50% of the width d1 were tested, however, such solutions are characterized by a low efficiency. When the width d2 constitutes 20% of the width d1, the flow of the rod-like articles through the channels is the slowest. The rod like articles 4 such as filter rods and cigarettes are wrapped in various wrapping materials, whereas they show a great variability of the coefficient of friction of the articles against one another. The rod-like articles 4 of a low coefficient of friction may be fed through a narrow channel to wide chambers of the multi-chamber tray as shown in Fig. 3a. The supporting elements in the left channel 2 are in the open configuration, while the supporting elements in the right channel are in the closed configuration. In the embodiment shown, the width d1 of the channel 2 and the width d2 of the limiting region 6 have values close to each other, whereas it is possible to build such channel hopper in which the width d1 constitutes 20% of the width d2. In the hopper in which such proportions are applied the flow of the rod-like articles 4 through the channels is the fastest, whereas in the widened outlet 2B of the channel 2, where the limiting element is provided with truncations 5, the flow of the rod-like articles 4 has a smaller speed. Due to the use of the truncations 5, the rod-like articles are uniformly distributed within the channel width.

The supporting elements 20, 21 may be provided with rollers 24 (Fig. 4) which facilitate inserting the supporting elements 20, 21 between the rod-like articles 4. The supporting elements 20, 21 may be provided with guiding rollers 25 (Fig. 6) with a diameter close to the diameter of the rod-like articles 4, whereas the guiding rollers 25 may be designed as rotational and may have a drive to rotate them during the change of configuration, which facilitates the movement of the supporting elements 20, 21 during the change of configuration both from open to closed and vice versa. Furthermore, the rotational guiding rollers 25 cause that the rod-like articles 4 which may be squeezed between the rollers 25 are removed from between the rollers 25.

The channel 2 of the channel hopper may be further provided with directing elements 26 shown in Fig. 7, whereas in the left channel the supporting elements 20, 21 take a position in the open configuration, and in the right channel in the closed configuration. The directing elements 26 have the task to form gently shaped lateral guides for the rod-like articles during the change of configuration of the supporting elements 20, 21. The directing elements 26 form surfaces with curvatures having radiuses which enable the rod-like articles to move smoothly, moreover, the moving rod-like articles are not damaged. As shown in the right channel 2 in Fig. 7, the supporting elements 20, 21 do not have to touch each other to close the flow of the articles because the closing is effected by the directing elements 26 and there is no risk that an article which has slipped in between the ends of the supporting elements 20, 21 is squeezed. Generally, the directing elements 26 ensure gentle handling of the rod-like articles in the channel hopper. The directing elements 26 are designed as flexible elements i.e. they are deformable under the influence of the weight of the rod-like articles in the channel, for example they may be made of fabric, plastic material, metal mesh or another material ensuring gentle guiding of the rod-like articles.

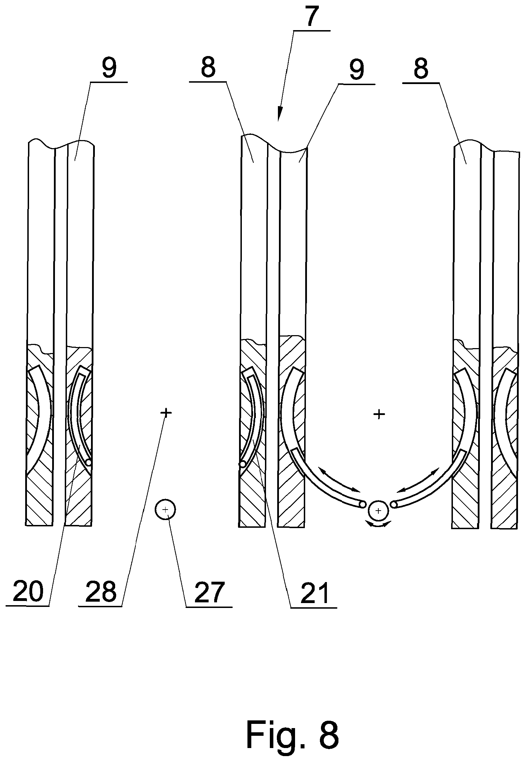

Fig. 8 shows an embodiment wherein the channel 2 of the hopper 1 is provided with a rotational roller 27 which rotates during the change from open to closed configuration of the supporting elements 20, 21, which results in a smooth flow of the rod-like articles 4 and eliminates situations in which the rod-articles are squeezed between the ends of the supporting elements 20, 21 which rotate around the axis 28. The roller 27 is situated centrally in the channel 2. The roller 27 may have its own drive mechanism and alternately rotate in opposite directions during the change of configuration, which is important primarily during the change from open to closed configuration. In the left channel 2 in the open configuration the supporting elements 20, 21 take a position in the walls 8, 9, whereas in the right channel 2 in the closed configuration they are pushed close, maintaining a certain clearance, to the roller 27. In this embodiment, it is possible to use the directing elements 26 in a similar way as in the previous embodiment.

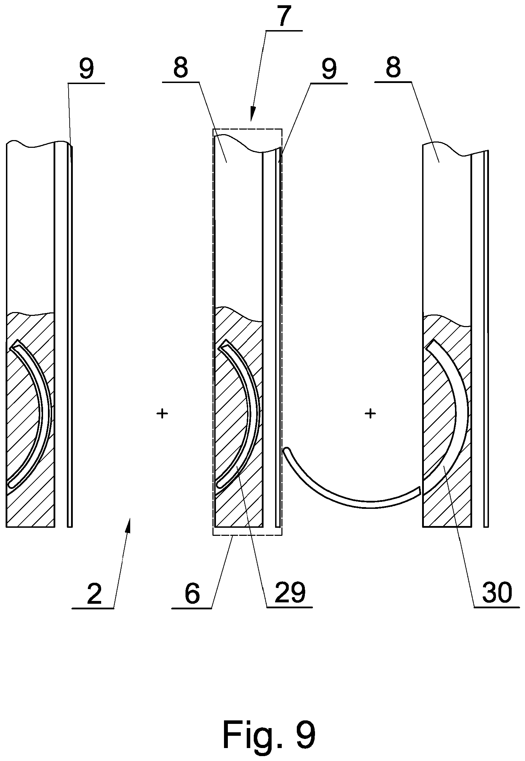

In the embodiment shown in Fig. 9, the channel 2 is provided with one cylindrically shaped supporting element 29 which is rotatably mounted and which in the open configuration takes a position in a groove 30 in the wall 8, i.e. in the limiting region 6, whereas in the closed configuration it takes a position in the channel 2.

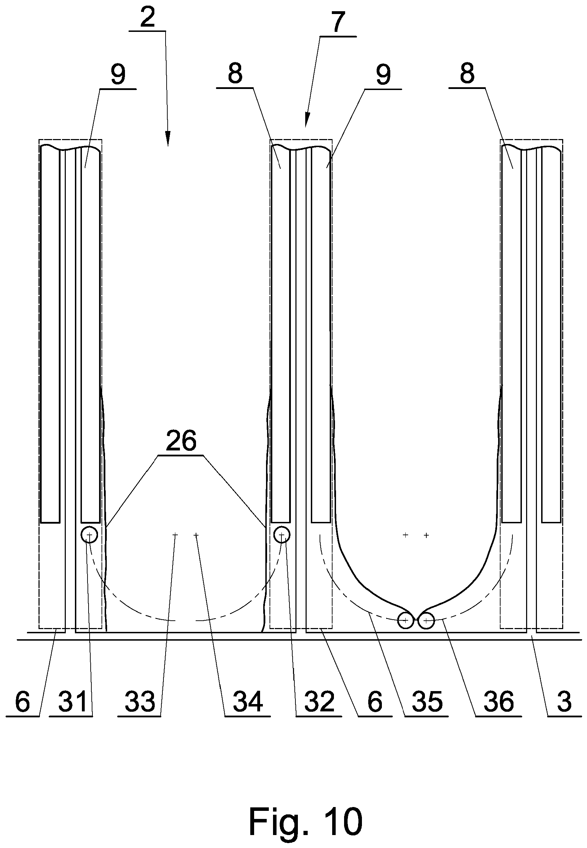

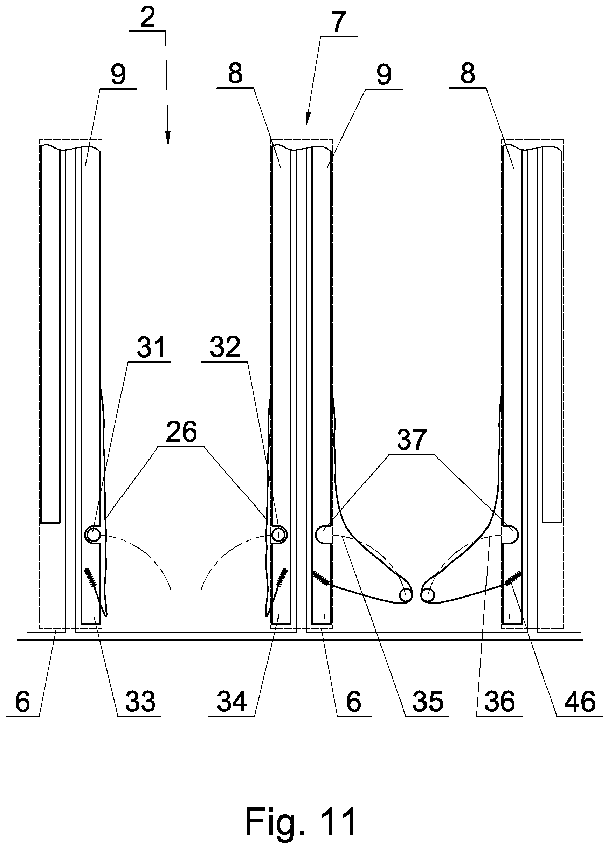

Fig. 10 shows an embodiment of the channel hopper 1 for the multi-chamber tray 3 wherein the supporting elements 31, 32 having the form of bars parallel to the walls 8, 9 are used, whereas the directing elements 26 are attached to the walls 8, 9. The bar 31 is attached to a rotatable drive mechanism (not shown in the drawing) and has the possibility of making an about ¼ rotation around the axis 33 in the anticlockwise direction, while the also rotatably mounted bar 32 has the possibility of making an about ¼ rotation around the axis 34 in the clockwise direction. The supporting elements 31, 32 move along the paths 35, 36, disclosed supporting elements 31, 32 have a circular cross-section, whereas they may have any other cross-section, for example semicircular. The left channel 2 shows the supporting elements 31, 32 in the open configuration, whereas the right channel 2 shows the supporting elements 31, 32 in the closed configuration. In the open configuration, the supporting elements 31, 32 take a position within the limiting region 6 under the limiting element 7, in the closed configuration the supporting elements 31, 32 take a position in the channel 2. During the change from open to closed configuration the directing elements 26 are arched under the pressure of the rod-like articles. A similar embodiment is shown in Fig. 11 where the bars also move along the arched paths 35, 36, whereas they are differently situated, and the supporting elements 31, 32 in the open configuration take a position in the cavities 37 in the walls 8, 9 in the limiting regions. The directing elements 26 are attached to springs 46, due to which the tightening of the directing elements 26 is ensured in the closed configuration.

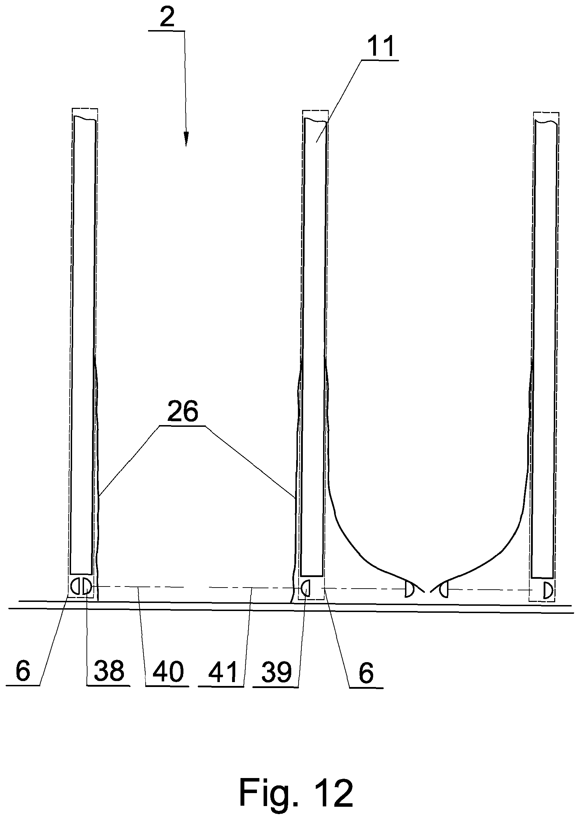

Fig. 12 shows an embodiment of the channel hopper 1' for the single-chamber tray 10 wherein the supporting elements 38, 39 having the form of bars parallel to the walls 11 are used, whereas the directing elements 26 are attached to the walls 11. The bar 38 is attached to a linear drive mechanism (not shown in the drawing) and moves along the path 40, whereas the bar 39 which is also slidably linearly mounted moves along the path 41. The supporting elements 38, 39 have a semicircular cross-section, whereas any other cross-section is possible. The left channel 2 shows the supporting elements 38, 39 in the open configuration, whereas the right channel 2 shows the supporting elements 38, 39 in the closed configuration. In the open configuration, the supporting elements 38, 39 take a position within the limiting region 6 underneath the limiting element 11, in the closed configuration the supporting elements 38, 39 take a position in the channel 2. During the change from open to closed configuration the directing elements 26 are arched under the pressure of the rod-like articles 4.

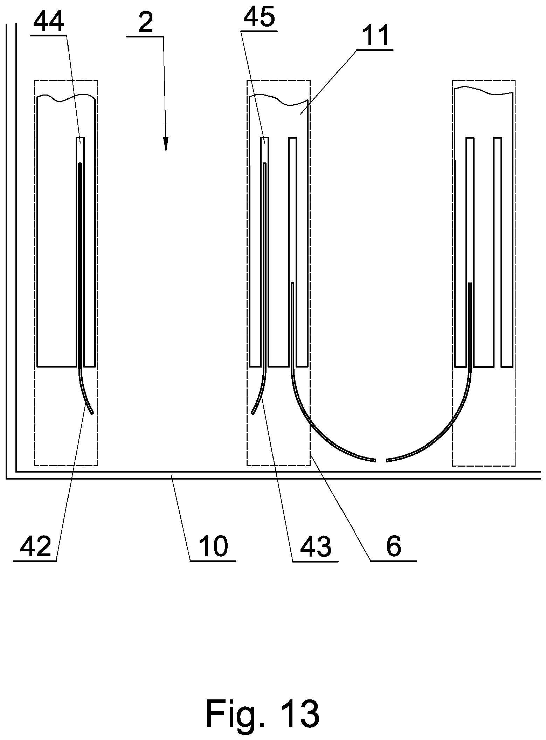

Fig. 13 shows an embodiment of the channel hopper 1' for the single-chamber tray 10 wherein the supporting elements 42, 43, which have the form of flat elements made of an elastic material and are arch shaped in the free state, are used. The supporting elements 42, 43 are located in the channels 44, 45, whereas a not shown linear drive mechanism moves the supporting elements 42, 43 along the channels 44, 45, up and down in the drawing. The part of the supporting element 42, 43 protruding from the channel 44, 45 has its normal i.e. arched shape, and the part of the supporting element 42, 43 in the channel 44, 45 remains flat. In the left channel 2 the supporting elements 42, 43 being in the open configuration protrude from the walls 11 to a small extent and take a position in the limiting region 6. In the right channel 2 the supporting elements 42, 43 being in the closed configuration protrude to an extent which allows blocking the rod-like articles 4 in the channel 2, and are partially inserted into the channel 2.

All embodiments of the hopper shown may be used for single-chamber trays as well as for multi-chamber trays. In the embodiments shown, the channels have the same volume, whereas it is possible to build a hopper provided with channels with different volumes. The channels in the hopper have a constant volume so that the flow of the rod-like articles through the channels may take place without disturbances. The operation of the supporting elements does not affect the channel volume, i.e. the channel volume is not changed during the change from closed to open configuration and vice versa.

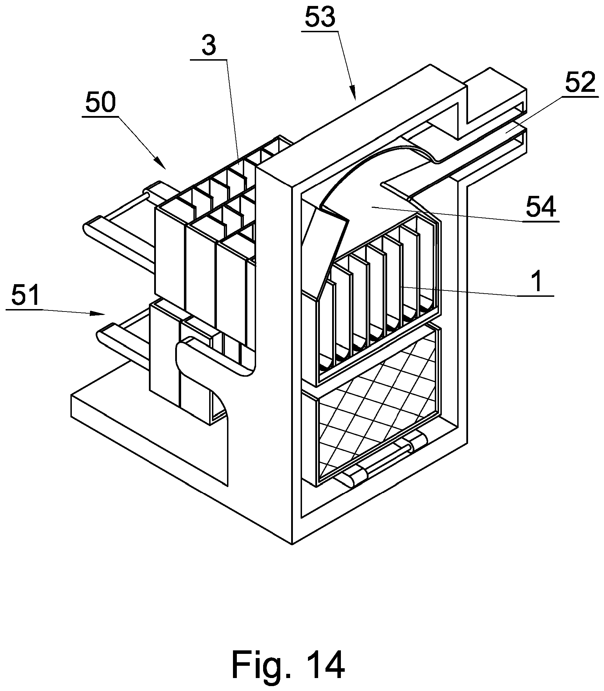

An embodiment of a filler of multi-chamber trays is shown in Fig. 14. The filler is provided with a conveyor 50 for conveying empty trays, a unit for moving the tray being filled (not visible in the drawing), a conveyor 51 for conveying filled trays, a feeder 52 of rod-like articles, a hopper 53 comprising a receiving region 54, and a channel hopper 1 for loading the multi-chamber tray 3. The channel hopper 1 is shown in a simplified form.

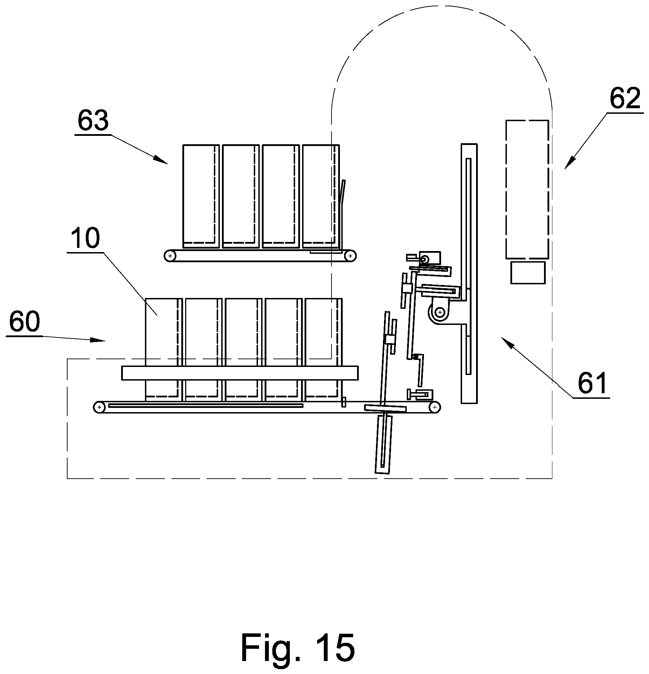

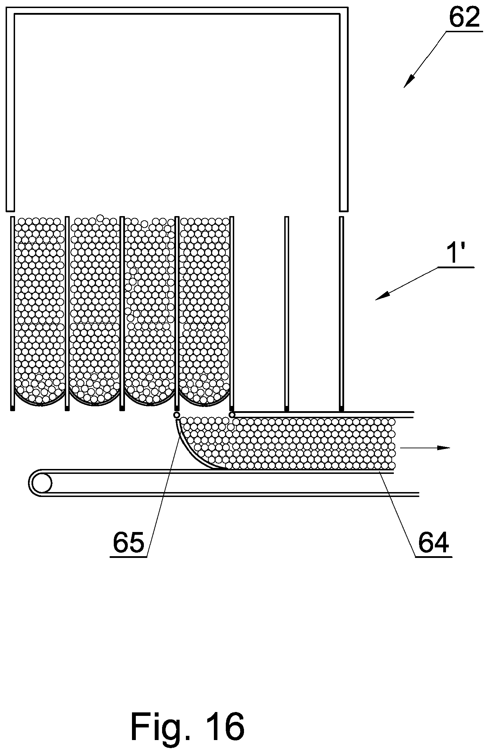

An embodiment of an unloader of single-chamber trays is shown in Fig. 15. The unloader is provided with a conveyor 60 for conveying filled trays, a handling unit 61 for turning of the filled tray, a hopper 62 comprising a channel hopper 1' (shown in a simplified form in Fig. 16) for emptying the single-chamber tray 10, and a conveyor 63 for conveying empty trays. In the embodiment shown, the rod-like articles are fed to the conveyor 64 in such a way that in successive channels the configuration of the supporting elements is changed from closed to open, and the inlet 65 of the conveyor 64 is moved below the successive channels of the hopper 1'.

## Claims

1. **A channel hopper** (1, 1') for rod-like articles (4) wherein the flow of the rod-like articles (4) through the channels (2) of the hopper takes place in the form of a mass flow under the influence of gravity, comprising:
at least two channels (2) for storage of rod-like articles (4), each channel being provided with an inlet (2A) and an outlet (2B) for rod-like articles and limited by side walls (8, 9),
wherein each channel (2) is situated between limiting regions (6), and the limiting region (6) comprises a limiting element (7, 11) with one or two of the side walls (8, 9) and having a lateral surface which limits the space of the channel (2), and
movable supporting elements adapted to change their configuration from open configuration to closed configuration and vice versa, whereas in the open configuration the flow of rod-like articles (4) through the channels (2) is enabled, and in the closed configuration the flow of rod-like articles (4) through the channels (2) is blocked,
**characterized in that**
at least one movable supporting element in the open configuration takes a position at least partially in the limiting region (6), and in the closed configuration takes a position at least partially inside the channel (2).

2. A hopper according to claim 1, **characterized by** comprising two movable supporting elements which in the open configuration take a position at least partially in adjacent limiting regions (6), and in the closed configuration take a position at least partially in the channel (2) between adjacent limiting regions (6).

3. A hopper according to claims 1 or 2, **characterized in that** the width of the limiting region (d2) is smaller than the width (d1) of the channel (2), in particular the width of the limiting region is in the range between 10% and 50% of the channel width (2).

4. A hopper according to claims 1 to 3, **characterized in that** the movable supporting element in the open configuration is situated inside the side wall (8, 9).

5. A hopper according to claims 1 to 4, **characterized in that** the movable supporting element in the open configuration is situated in whole in the limiting region (6).

6. A hopper according to claims 1 to 5, **characterized in that** the movable supporting element (20, 21, 29) has the form of a cylindrical surface sector.

7. A hopper according to claim 6, **characterized in that** the movable supporting element (20, 21) has a guiding roller (25).

8. A hopper according to claims 1 to 5, **characterized in that** the movable supporting element (31, 32, 38, 39) has the form of a bar.

9. A hopper according to claims 1 to 8, **characterized in that** movable supporting element (20, 21, 29, 31, 32) is arranged to make a swing movement.

10. A hopper according to claims 1 to 8, **characterized in that** movable supporting element (37, 38) is arranged to make a linear movement.

11. A hopper according to claims 1 to 10, **characterized in that** movable supporting element in the open configuration is situated at least partially inside a limiting element (7, 11).

12. A hopper according to claims 1 to 10, **characterized in that** the movable supporting element (31, 32, 38, 39) in the open configuration is situated at least partially under the limiting element (7,11).

13. A hopper according to claims 1 to 12, **characterized in that** a guiding element (26) made of a fabric, a plastic material or a metal mesh is attached to the limiting element (7, 11).

14. A hopper according to claims 1 to 13, **characterized in that** the channel (2) has a constant volume.

15. **A filler** for loading a container (3, 10) with rod-like articles (4) comprising a conveyor (51) of empty containers, a unit for moving the container being filled, a conveyor (52) of filled containers, and a mass flow hopper for rod-like articles, **characterized by** being provided with a channel hopper according to claims 1 to 14.

16. **An unloader** for emptying a container (3, 10) of rod-like articles (4) comprising a conveyor of filled containers, a handling unit for turning of the filled container, and a conveyor of empty containers, **characterized by** being provided with a channel hopper according to claims 1 to 15.

## Patentansprüche

1. Ein Kanaltrichter (1, 1') für stabförmige Gegenstände (4), bei dem der Fluss der stabförmigen Gegenstände (4) durch die Kanäle (2) des Trichters als Massenfluss unter dem Einfluss der Schwerkraft stattfindet, umfassend:
mindestens zwei Kanäle (2) zur Lagerung von stabförmigen Gegenständen (4), von denen jeder Kanal mit einem Einlass (2A) und einem Auslass (2B) für stabförmige Gegenstände versehen und durch Seitenwände (8, 9) begrenzt ist,
wobei jeder Kanal (2) zwischen Begrenzungsbereichen (6) liegt und der Begrenzungsbereich (6) ein Begrenzungselement (7, 11) mit einer oder zwei der Seitenwände (8, 9) und mit einer Seitenfläche, die den Raum des Kanals (2) begrenzt, und
bewegliche Stützelemente umfasst, die dazu ausgelegt sind, ihre Konfiguration von einer offenen Konfiguration in eine geschlossene Konfiguration und umgekehrt zu ändern, wohingegen in der offenen Konfiguration der Fluss von stabförmigen Gegenständen (4) durch die Kanäle (2) ermöglicht wird und in der geschlossenen Konfiguration der Fluss von stabförmigen Gegenständen (4) durch die Kanäle (2) blockiert wird,
die **dadurch gekennzeichnet sind,**
**dass** mindestens ein bewegliches Stützelement in der offenen Konfiguration eine Position einnimmt, die mindestens teilweise in dem Begrenzungsbereich (6) liegt, und in der geschlossenen Konfiguration eine Position einnimmt, die mindestens teilweise innerhalb des Kanals (2) liegt.

2. Ein Trichter nach Anspruch 1, **gekennzeichnet durch** zwei bewegliche Stützelemente, die in der offenen Konfiguration eine Position zumindest teilweise in benachbarten Begrenzungsbereichen (6) und in der geschlossenen Konfiguration eine Position zumindest teilweise in dem Kanal (2) zwischen benachbarten Begrenzungsbereichen (6) einnehmen.

3. Ein Trichter nach Anspruch 1 oder 2, insbesondere **dadurch gekennzeichnet, dass** die Breite des Begrenzungsbereichs (d2) kleiner ist als die Breite (dl) des Kanals (2), wobei die Breite des Begrenzungsbereichs im Bereich zwischen 10 % und 50 % der Kanalbreite (2) liegt.

4. Ein Trichter nach einem der Ansprüche 1 bis 3, **gekennzeichnet dadurch, dass** sich das bewegliche Stützelement in der offenen Konfiguration innerhalb der Seitenwand (8, 9) befindet.

5. Ein Trichter nach einem der Ansprüche 1 bis 4, **gekennzeichnet dadurch, dass** sich das bewegliche Stützelement in der offenen Konfiguration vollständig im Begrenzungsbereich (6) befindet.

6. Ein Trichter nach einem der Ansprüche 1 bis 5, **gekennzeichnet dadurch, dass** das bewegliche Stützelement (20, 21, 29) die Form eines zylindrischen Oberflächensektors hat.

7. Ein Trichter nach Anspruch 6, **gekennzeichnet dadurch, dass** das bewegliche Stützelement (20, 21) eine Führungsrolle (25) aufweist.

8. Ein Trichter nach einem der Ansprüche 1 bis 5, **gekennzeichnet dadurch, dass** das bewegliche Stützelement (31, 32, 38, 39) die Form eines Stabes hat.

9. Ein Trichter nach einem der Ansprüche 1 bis 8, **gekennzeichnet dadurch, dass** das bewegliche Stützelement (20, 21, 29, 31, 32) so angeordnet ist, dass es eine Schwenkbewegung ausführt.

10. Ein Trichter nach einem der Ansprüche 1 bis 8, **gekennzeichnet dadurch, dass** das bewegliche Stützelement (37, 38) so angeordnet ist, dass es eine lineare Bewegung ausführt.

11. Ein Trichter nach einem der Ansprüche 1 bis 10, **gekennzeichnet dadurch, dass** sich das bewegliche Stützelement in der offenen Konfiguration zumindest teilweise innerhalb eines Begrenzungselements (7, 11) befindet.

12. Ein Trichter nach einem der Ansprüche 1 bis 10, **gekennzeichnet dadurch, dass** sich das bewegliche Stützelement (31, 32, 38, 39) in der offenen Konfiguration zumindest teilweise unter dem Begrenzungselement (7, 11) befindet.

13. Ein Trichter nach einem der Ansprüche 1 bis 12, **gekennzeichnet dadurch, dass** an dem Begrenzungselement (7, 11) ein Führungselement (26) aus einem Gewebe, einem Kunststoffmaterial oder einem Metallgitter angebracht ist.

14. Ein Trichter nach einem der Ansprüche 1 bis 13, **gekennzeichnet dadurch, dass** der Kanal (2) ein konstantes Volumen hat.

15. Eine Füllvorrichtung zum Beladen eines Behälters (3, 10) mit stabförmigen Gegenständen (4), mit einem Förderer (51) für leere Behälter, einer Einheit zum Bewegen des zu füllenden Behälters, einem Förderer (52) für gefüllte Behälter und einem Massenfluss-Trichter für stabförmige Gegenstände, **dadurch gekennzeichnet, dass** sie mit einem Kanaltrichter nach einem der Ansprüche 1 bis 14 versehen ist.

16. Eine Entladevorrichtung zum Entleeren eines Behälters (3, 10) mit stabförmigen Gegenständen (4), die einen Förderer für gefüllte Behälter, eine Handhabungseinheit zum Wenden des gefüllten Behälters und einen Förderer für leere Behälter umfasst, **dadurch gekennzeichnet, dass** sie mit einem Kanaltrichter nach einem der Ansprüche 1 bis 15 versehen ist

## Revendications

1. Une trémie à canaux (1, 1') pour des articles en forme de tige (4) dans laquelle la circulation des articles en forme de tige (4) à travers les canaux (2) de la trémie s'effectue sous la forme d'un débit massique sous l'influence de la gravité, comportant :
au moins deux canaux (2) pour le stockage d'articles en forme de tige (4), chaque canal comportant une entrée (2A) et une sortie (2B) pour des articles en forme de tige et étant limité par des parois latérales (8, 9),
dans laquelle chaque canal (2) se trouve entre les zones de délimitation, et la zone de délimitation (6) comprend un élément délimitant (7, 11) avec une ou deux des parois latérales (8, 9) et présentant une surface latérale qui limite l'espace du canal (2), et
des éléments de support adaptés pour modifier leur configuration afin de passer d'une configuration ouverte à une configuration fermée, et vice et versa. En configuration ouverte, la circulation des articles en forme de tige (4) à travers les canaux (2) est activée, et en configuration fermée la circulation des articles en forme de tige (4) à travers les canaux (2) est bloquée,
**caractérisée en ce**
**qu'**au moins un élément de support mobile dans la configuration ouverte se positionne au moins partiellement dans la zone délimitante (6), et dans la configuration fermée se positionne au moins partiellement à l'intérieur du canal (2).

2. Un canal selon la revendication 1, **caractérisé en ce qu'**il comporte deux éléments de support mobiles qui, dans la configuration ouverte, se positionnent au moins partiellement dans les zones délimitantes adjacentes (6), et qui, dans la configuration fermée, se positionnent au moins partiellement dans le canal (2) entre les zones délimitantes adjacentes (6).

3. Une trémie selon les revendications 1 ou 2, **caractérisée en ce que** la largeur de la zone délimitante (d2) est inférieure à la largeur (d1) du canal (2), plus particulièrement la largeur de la zone délimitante se situe entre 10 % et 50 % de la largeur du canal (2).

4. Une trémie selon les revendications 1 à 3, **caractérisée en ce que** l'élément de support mobile dans la configuration ouverte est situé à l'intérieur de la paroi latérale (8, 9).

5. Une trémie selon les revendications 1 à 4, **caractérisée en ce que** l'élément de support mobile dans la configuration ouverte est situé en totalité dans la zone délimitante (6).

6. Une trémie selon les revendications 1 à 5, **caractérisée en ce que** l'élément de support mobile (20, 21, 29) présente la forme d'un secteur de surface cylindrique.

7. Une trémie selon la revendication 6, **caractérisée en ce que** l'élément de support mobile (20, 21) présente un rouleau de guidage (25).

8. Une trémie selon les revendications 1 à 5, **caractérisée en ce que** l'élément de support mobile (31, 32, 38, 39) présente la forme d'une barre.

9. Une trémie selon les revendications 1 à 8, **caractérisée en ce que** l'élément de support mobile (20, 21, 29, 31, 32) est conçu pour effectuer un mouvement de balancier.

10. Une trémie selon les revendications 1 à 8, **caractérisée en ce que** l'élément de support mobile (37, 38) est conçu pour effectuer un mouvement linéaire.

11. Une trémie selon les revendications 1 à 10, **caractérisée en ce que** l'élément de support mobile dans la configuration ouverte est situé au moins partiellement à l'intérieur de l'élément délimitant (7, 11).

12. Une trémie selon les revendications 1 à 10, **caractérisée en ce que** l'élément de support mobile (31, 32, 38, 39) dans la configuration ouverte est situé au moins partiellement sous l'élément délimitant (7,11).

13. Une trémie selon les revendications 1 à 12, **caractérisée en ce que** l'élément de guidage (26) fabriqué en textile, en matière plastique ou en treillis métallique est fixé à l'élément délimitant (7, 11).

14. Une trémie selon les revendications 1 à 13, **caractérisée en ce que** le canal (2) a un volume constant.

15. Un remplisseur pour charger un récipient (3, 10) avec des articles en forme de tige (4) comportant un convoyeur (51) de récipients vides, une unité pour déplacer le récipient en train d'être rempli, un convoyeur (52) de récipients remplis, et une trémie à débit massique pour des articles en forme de tige, **caractérisé en ce qu'**il est fourni avec une trémie de canaux selon les revendications 1 à 14.

16. Un déchargeur pour vider un récipient (3, 10) d'articles en forme de tige (4) comportant un convoyeur de récipients remplis, une unité de manutention pour tourner le récipient rempli, et un convoyeur de récipients vides, **caractérisé en ce qu'**il est fourni avec une trémie à canaux selon les revendications 1 à 15.
